# FASCICULE DE BREVET EUROPEEN

(11) **EP 1 103 992 B1**
(45) Date de publication et mention de la délivrance du brevet: **10.09.2008**
(21) Numéro de dépôt: 00403161.3
(22) Date de dépôt: 14.11.2000
(51) Int. Cl.: H01F 7/16, F16K 31/06, F15B 13/04, F15B 13/044

(54) **Electrovanne miniature, procédés de son montage**
Elektromagnetiches Miniaturventil und Verfahren zu dessen Zusammenbau
Miniature electromagnetic valve and assembling procedure

(30) Priorité: 24.11.1999 FR 9914775
(43) Date de publication de la demande: 30.05.2001
(73) Titulaire: Parker Hannifin France S.A.S., 74100 Ville la Grand (FR)
(72) Inventeur: Bouteille, Daniel, 78220 Viroflay (FR); Muller, Patrick, 27950 Villez sous Bailleul (FR); Rodrigues, Philippe, 27180 Arnières sur Iton (FR)
(74) Mandataire: Robert, Jean-Pierre

(56) Documents cités:
- EP-A- 0 687 843
- FR-A- 1 198 043
- US-A- 3 303 854
- US-A- 3 559 686
- US-A- 3 823 736
- US-A- 4 889 164

## Description

La présente invention concerne une électrovanne miniature (pneumatique) dont la conception autorise des procédés de fabrication économique garantissant des performances de grande qualité.

La progression de l'automatisation pneumatique est liée à la miniaturisation de ses composants et notamment des électrovannes de pilotage des dispositifs de distribution. Les constructeurs sont ainsi progressivement passés en quelques années d'électrovannes dont la plus petite dimension était supérieure à 20 mm à des électrovannes dont cette dimension atteint 10 mm. Cependant la fabrication des électrovanne de cette taille passe par des solutions coûteuses qui ne permettent d'obtenir que des performances réduites du fait des difficultés rencontrées dans la maîtrise avec précision des dimensions des pièces qui en constituent les éléments fonctionnels et des procédures de leur assemblage pour obtenir une qualité constante d'une électrovanne à l'autre. En effet la diminution des dimensions à entraîné la diminution des sections de passage de fluide donc la puissance pneumatique disponible en sortie de l'électrovanne et on constate que dans bien des cas la somme des tolérances de fabrication et de montage des pièces fonctionnelles de l'électrovanne est, dans ces dimensions, du même ordre de grandeur que l'une des dimensions des sections de passage.

Par ailleurs sur le plan électromagnétique l'alimentation de ces appareils est réalisée à très faible puissance du fait d'un enroulement très miniaturisé. La course efficace du noyau plongeur de l'électro-aimant de manoeuvre du ou des clapets est alors extrêmement réduite.

Il résulte de ces contraintes qu'il faut mettre en oeuvre une fabrication extrêmement soignée des pièces de l'électrovanne et/ou une procédure de montage complexe afin de procéder pour chaque électrovanne à des réglages précis et individuels qui pénalisent le prix de revient. On citera à cet effet le document FR 2.643.370 qui est une illustration de l'une de ces solutions technologiques coûteuses.

Pour mémoire, on citera également un certain nombre de documents tels que DE 2 340 304, DE 1 871 835 U, DE 4 125 816, US 3 303 854 et FR 1 198 043 qui tous décrivent des électrovannes d'une structure voisine de celle de l'invention mais qui ne sont pas adaptées à une miniaturisation industrielle réalisable à un coût acceptable.

Par la présente invention, on entend remédier à ces inconvénients en proposant une électrovanne dont la structure est simple à fabriquer et à assembler ce qui conduit à une réduction importante des coûts, à une qualité constante de fabrication et à la possibilité d'obtenir une puissance pneumatique supérieure à celle requise pour le seul pilotage des distributeurs.

En effet, un autre objectif de l'invention, qui est atteint par la conception même de cette électrovanne, est d'en constituer un organe de commande direct de petits vérins. Ces petits vérins ont une consommation en fluide pneumatique qui demande des sections de passage interne de leur organe de commande correspondant à un diamètre de l'ordre de 1 mm, ce qui est très supérieur à la section de passage nécessaire à la commande des distributeurs.

A cet effet l'invention a pour objet une électrovanne miniature comportant :
- un corps d'électrovanne,
- un électro-aimant avec une culasse solidaire du corps et un noyau plongeur mobile par rapport à la culasse le long d'un axe longitudinal de l'électro-aimant,
- une chambre pneumatique ménagée dans le corps du côté d'une extrémité du noyau plongeur opposée à la culasse, dans laquelle chambre débouche librement un premier conduit et, chacun au travers d'un siège, un deuxième et un troisième conduits, les débouchés des deuxième et troisième conduits étant coaxiaux à l'axe longitudinal de l'électro-aimant et à l'opposé l'un de l'autre,
- un premier et un second clapet, encadrant avec jeu les deux sièges, le premier clapet étant porté par le noyau plongeur et le second clapet étant porté par un équipage mobile maintenu au contact du noyau plongeur par un organe élastique de rappel pour être déplacé avec ce dernier entre une première position correspondant à l'état excité de l'électroaimant dans laquelle le noyau plongeur est en butée contre la culasse et une seconde position correspondant à l'absence d'excitation de l'électro-aimant dans laquelle le premier clapet est en butée contre son siège, les deux sièges étant ménagés à l'extrémité d'une pièce unique qui comporte intérieurement les extrémités des deuxième et troisième conduits, cette pièce étant rapportée dans le corps de l'électrovanne dans la direction de l'axe commun à l'électro-aimant et aux sièges et immobilisée dans une position précise le long de cet axe et propre à chaque électrovanne.

Cette première disposition est celle qui permet de maîtriser industriellement la position relative des sièges par rapport à la course de l'électro-aimant et notamment par rapport à la partie la plus efficace de cette course, comme cela apparaîtra de la description ci-après.

Dans un premier mode de réalisation, l'équipage susdit comprend un jeu d'entretoises s'étendant entre les clapets, à l'extérieur de ladite pièce porte-clapets, dont la longueur est égale à la distance séparant les deux sièges augmentée de la course désirée de chacun des clapets. Dans la mesure où la matière du second clapet est déformable, il peut être préférable que la face du second clapet tournée vers son siège soit surmontée d'une rondelle périphérique d'appui des entretoises, la distance séparant la surface d'appui des entretoises de la surface de la partie active du clapet venant en diminution de la longueur des entretoises.

Il résulte de cette structure une grande maîtrise de la course pneumatique. En effet cette maîtrise passe par la relation entre les dimensions de la pièce porte-sièges et des entretoises. En choisissant un matériau métallique pour ces organes et un procédé de fabrication par usinage (décolletage), on obtient de manière relativement peu coûteuse une grande précision de leur dimension. On supprime en outre un contact direct entre les entretoises métalliques et les clapets qui sont nécessairement dans un matériau déformable à base d'élastomère, évitant des incrustations de ces entretoises dans la surface de ce matériau qui, en fonctionnement, introduit des aléas dans la valeur de la course que l'on cherche à garder constante et dans la position relative des éléments en mouvement, notamment si les efforts de pilotage ou les efforts résistants à vaincre au niveau des clapets varient. On remarquera que cette rondelle vient ajouter une tolérance à maîtriser pour la détermination de la course pneumatique, ce qui n'est pas un problème car la fabrication de cette rondelle (découpage) permet de respecter des tolérances serrées.

Par ailleurs, pour changer la course, qui détermine la section de passage interne de l'électrovanne, il suffit de changer uniquement la pièce porte-sièges, avec donc la même maîtrise de précision.

Dans un deuxième mode de réalisation la pièce porte-sièges et l'équipage mobile sont en matière thermoplastique réalisée sous forme d'une cartouche préassemblée comportant ladite pièce, l'équipage mobile avec le second clapet, un bouchon rapporté sur la pièce porte-siège du côté du second clapet et un organe élastique de rappel placé entre le bouchon et le second clapet, l'équipage mobile étant formé par un étrier en matière thermoplastique comprenant une coupelle de maintien du second clapet prolongé en une seule pièce par au moins deux branches longitudinales parallèles à l'axe commun susdit, traversant la pièce porte-siège et dont les extrémités libres sont situées de part et d'autre du siège situé en regard du premier clapet.

On notera dans ce cas que la maîtrise de la course pneumatique s'opère au niveau de la réalisation de la cartouche d'une manière simple comme cela sera décrit ci-après.

L'un des nombreux avantages de cette structure réside dans le fait que, dans un même corps d'électrovanne, par l'intermédiaire duquel on réalise de manière standard l'interface avec les appareils extérieurs, on peut mettre en place des pièces porte-sièges de section de passage du fluide différentes et de longueurs différentes pour définir une course correspondant au débit voulu, ce qui autorise une fabrication extrêmement standardisée d'électrovannes de calibres différents. On rappellera à ce propos que, pour maintenir une section de passage entre siège et clapet, pour un diamètre de conduit donné, il faut que la course du clapet soit égale au quart de ce diamètre. On comprend donc que si on souhaite doubler le diamètre de passage, donc doubler la course, l'augmentation de calibre requiert d'accroître la course d'une valeur égale au quart du diamètre du calibre le plus bas et qu'il est aisé de prévoir dans le corps de l'électrovanne (par exemple en matière plastique) une chambre pneumatique de dimensions uniques pour tous les calibres capable de contenir la course maximale, la fixation des paramètres régissant la valeur de la course étant réalisée par des pièces indépendantes du corps de l'électrovanne et qui lui sont rapportées.

Parmi les autres particularités de l'invention qui seront décrites ci-dessous, on signalera celle selon laquelle la pièce porte-sièges est de révolution pourvue extérieurement de trois moyens de cramponnage axialement espacés les uns des autres pour sa fixation dans le corps en matière plastique et, entre ces moyens de cramponnage, de deux gorges extérieures formant des sections, des deuxième et troisième conduits entre leur portion terminale contenue dans la pièce et leur portion ménagée dans le corps, sections qui sont étanches entre elles et à l'égard de la chambre pneumatique. L'assemblage de cette pièce au corps de l'électrovanne, dans la chambre pneumatique, est réalisé ainsi par simple enfoncement à force de l'une dans l'autre. Ceci, associé au fait que la partie du corps formant la paroi latérale de la chambre pneumatique est pourvue d'un orifice débouchant d'une part dans la zone de la chambre contenant le siège le plus proche de l'électro-aimant et d'autre part, à la surface extérieure du corps opposé à la surface de pose pour loger un organe de commande manuelle, conduit à un premier procédé de fabrication de l'électrovanne particulièrement aisé qui permet d'obtenir toutes les précisions requises pour une électrovanne de qualité et de fonctionnement fiable.

En effet, pour la fabrication d'électrovannes avec une pièce porte-sièges et un équipage mobile métalliques et décolletés, ce procédé consiste pour l'assemblage de l'électrovanne, à introduire par l'orifice latéral de l'organe de commande manuelle avant sa mise en place, une cale d'épaisseur en regard de l'électro-aimant, l'épaisseur de la cale étant égale à la course désirée des clapets et à enfoncer à force la pièce porte-sièges dans l'évidement du noyau central de la chambre pneumatique par un outil introduit par l'ouverture d'extrémité de celle-ci avant mise en place de l'obturateur jusqu'à provoquer la mise en butée du noyau de l'électro-aimant contre sa culasse et retirer la cale d'épaisseur. Ainsi, on a obtenu que la course des clapets corresponde avec précision à la course de l'électro-aimant la plus efficace, c'est-à-dire celle la plus proche de l'entrefer nul, autorisant ainsi une meilleure certitude de bon fonctionnement à puissance ou débit pneumatique faible et la réalisation de variantes à forte puissance (ou débit fort) lorsqu'elles sont nécessaires.

A cet égard on rappellera que, pour une puissance d'excitation donnée, l'effort développé par l'électro-aimant est d'autant plus élevé que le noyau plongeur est proche de la culasse et permet ainsi de mieux dominer les efforts dus à la pression pneumatique s'appliquant sur la section des sièges. Or, ces efforts dépendent de la section du siège et varient donc en fonction du débit voulu si bien que, pour un même électro-aimant, les efforts résistants que celui-ci doit vaincre sont différents selon l'application désirée de l'électrovanne. Le procédé de montage indiqué ci-dessus permet d'être assuré d'une procédure de fabrication qui place l'électro-aimant dans sa condition optimale de fonctionnement, quelle que soit la destination future de cette électrovanne, donc la longueur de la course des clapets.

Pour la fabrication d'électrovannes dans lesquelles la pièce porte-sièges et l'équipage mobile sont préparés en cartouche, l'invention concerne un second procédé qui consiste à réaliser l'assemblage de la cartouche, à calibrer la distance axiale entre les extrémités libres des branches, de l'étrier et le siège situé en regard du premier clapet et à procéder à l'emmanchement à force de la cartouche dans le corps de l'électrovanne jusqu'à obtenir un écartement précis entre le premier clapet et son siège lorsque le noyau plongeur est en appui sur la culasse.

Dans ce cas, le calibrage susdit est réalisé par une fusion partielle du siège et des extrémités des branches de l'étrier au moyen d'un outil de forme appliqué à chaud sur l'extrémité correspondante de la cartouche.

Enfin, de manière préférée, pour obtenir l'écartement précis susdit, pendant l'enfoncement de la cartouche dans le corps de l'électrovanne, on soumet l'électro-aimant à une alimentation de référence tendant à attirer le noyau plongeur contre la culasse une fois atteint un entrefer déterminé et à stopper l'enfoncement quand le décollement du premier clapet de son siège est constaté.

D'autres caractéristiques et avantages de l'invention ressortiront de la description de l'un de ses modes de réalisation préféré donné ci-après à titre d'exemple.

Il sera fait référence aux dessins annexés parmi lesquels :
- la figure 1 est une vue en coupe longitudinale d'une première réalisation d'une électrovanne conforme à l'invention,
- la figure 2 est une vue en coupe selon la ligne II-II de la figure 1,
- la figure 3 est une vue en coupe selon la ligne III-III de la figure 1,
- la figure 4 est une vue en coupe selon la ligne IV-IV de la figure 1,
- la figure 5 est une vue en coupe selon la ligne V-V de la figure 1,
- la figure 6 est une vue en coupe partielle selon la ligne VI-VI de la figure 4,
- la figure 7 et la figure 8 sont des vues de détail selon des coupes VII-VII et VIII-VIII de la figure 1,
- les figures 9A et 9B sont deux vues de dessous de l'électrovanne de la figure 1 au niveau de sa chambre pneumatique,
- les figures 10 et 11 illustrent schématiquement deux associations possibles de l'électrovanne de l'invention avec, pour la figure 10, un distributeur et pour la figure 11, une embase de liaison,
- la figure 12 illustre un procédé de montage selon l'invention avec une variante de réalisation de la pièce porte-sièges.
- la figure 13 illustre par une vue en coupe longitudinale, un second mode de réalisation de l'électrovanne selon l'invention,
- la figure 14 est une vue éclatée des principaux constituants de cette électrovanne,
- la figure 15 illustre le principe mis en oeuvre pour calibrer la course pneumatique de l'électrovanne.

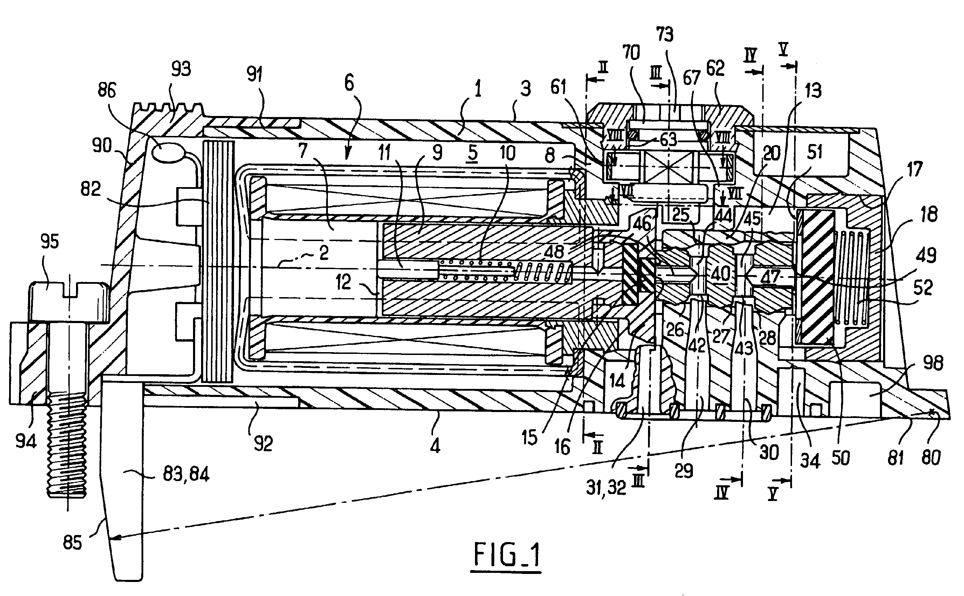

L'électrovanne représentée aux figures 1 à 12 comporte un corps 1 allongé possédant un axe général 2, de forme parallélépipédique, donc de section transversale sensiblement rectangulaire. Extérieurement ce corps présente quatre surfaces latérales dont une surface supérieure 3, une surface inférieure 4, parallèle à l'axe 2 et formant la surface de pose de l'électrovanne. Il est évidé en deux sections principales. Dans une première section 5 est logé un électro-aimant 6 avec une armature, une bobine et une culasse 7 qui sont fixées à une paroi terminale 8 de la section 5 évidée.

De manière connue l'électro-aimant possède un noyau plongeur 9 monté à coulissement dans un logement cylindrique qui prolonge la culasse 7. Un ressort 10 logé dans le noyau plongeur 9 et agissant sur un piston 11 en appui sur la surface d'extrémité de la culasse 7, tend à écarter le noyau plongeur de cette culasse en l'absence d'excitation. Lorsque l'électro-aimant est excité, les forces magnétiques mises en jeu surmontent l'effet du ressort 10 pour plaquer l'extrémité 12 du noyau plongeur 9 contre la paroi terminale de la culasse 7 (entrefer nul).

L'extrémité du noyau plongeur opposée à sa surface 12 pénètre à l'intérieur d'une deuxième section 13 de l'évidement du corps 1 qui forme la chambre pneumatique de l'électrovanne. Cette extrémité est équipée d'un plateau 14 qui lui est cramponné, plateau 14 dont la partie centrale est formée d'un matériau en élastomère qui constitue un premier clapet 15 de l'électrovanne. Ce clapet 15, enfermé entre l'extrémité du noyau 9 et le plateau 14, a été arasé pour que sa surface 16 tournée vers la chambre 13 soit affleurante de la surface radiale du plateau 14. L'évidement du corps 1 qui constitue cette chambre 13 débouche par une large ouverture 17 à l'une des extrémités longitudinales du corps 1 opposée à celle qui accueille l'électro-aimant. Cette ouverture 17 est obturée de manière définitive comme on le verra ci-après, par un bouchon 18, de préférence métallique, fixé par cramponnage à l'intérieur de l'ouverture 17.

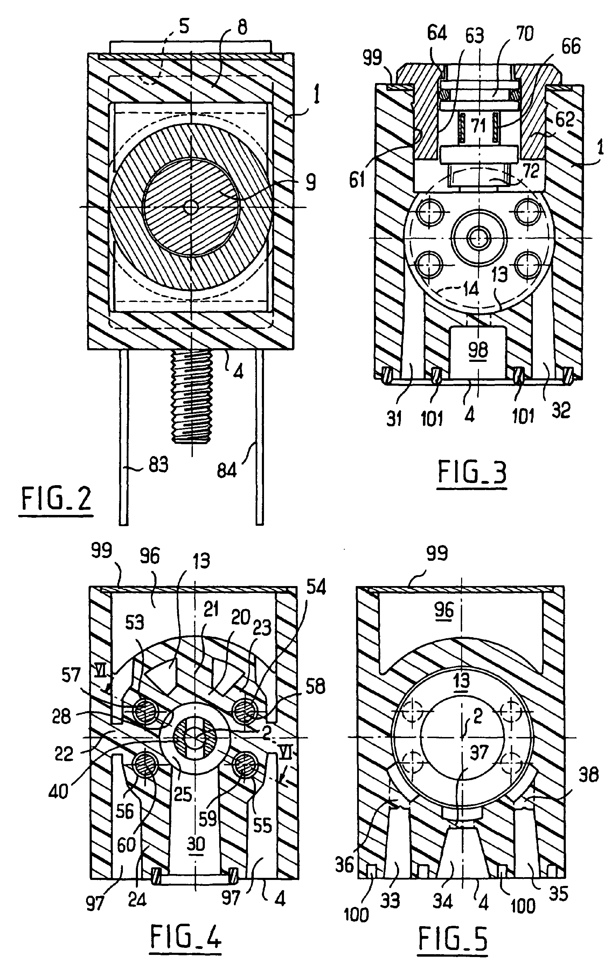

A l'intérieur de la chambre pneumatique 13 on trouve un noyau central 20 d'axe 2 qui est relié aux portions du corps 1 entourant cette chambre par des parois radiales telles que 21, 22, 23 et 24 (figure 4), la paroi 24 étant relativement épaisse et relativement large et s'étendant sensiblement perpendiculairement à la surface de pose 4.

Le noyau 20 possède un évidement central cylindrique 25 d'axe 2, plus exactement formé de trois sections cylindriques étagées 26, 27 et 28, la section 26 de plus petit diamètre étant celle la plus proche du clapet 15. En outre, la paroi épaisse 24 comporte deux conduits 29 et 30 débouchant dans l'évidement 25 par l'une de leurs extrémités tandis que leur autre extrémité débouche à l'extérieur du corps 1 au travers de la surface de pose 4.

Par ailleurs, le corps 1 possède deux autres conduits 31 et 32, qui forment les branches alternatives d'un même conduit fonctionnel, symétriques l'une de l'autre par rapport à un plan perpendiculaire à la face 4 et passant par l'axe 2 (le plan de la figure 1), ces conduits 31 et 32 débouchant à l'extérieur du corps 1 au niveau de la surface de pose 4 et par leur autre extrémité, débouchant dans la chambre 13. Ces conduits 31 et 32 sont situés dans un même plan transversal de l'électrovanne.

Au-delà des conduits 29 et 30, le corps 1 possède des amorces de conduits 33, 34 et 35 situées également dans un même plan transversal du corps au niveau de la partie de la chambre 13 la plus voisine du bouchon 18, ces amorces étant réalisées perpendiculairement à la surface de pose 4 et séparées de la chambre 13 par un fond 36, 37 et 38, fond qui constitue une paroi mince percée pour certains cas d'utilisation de l'électrovanne. Les conduits qui seraient ainsi constitués forment des alternatives aux conduits 31 et 32 pour un même circuit fonctionnel comme cela sera expliqué ci-après. Dans ce cas, les conduits 31 et 32 resteraient à l'état d'amorces, alors qu'ils sont représentés percés sur les figures.

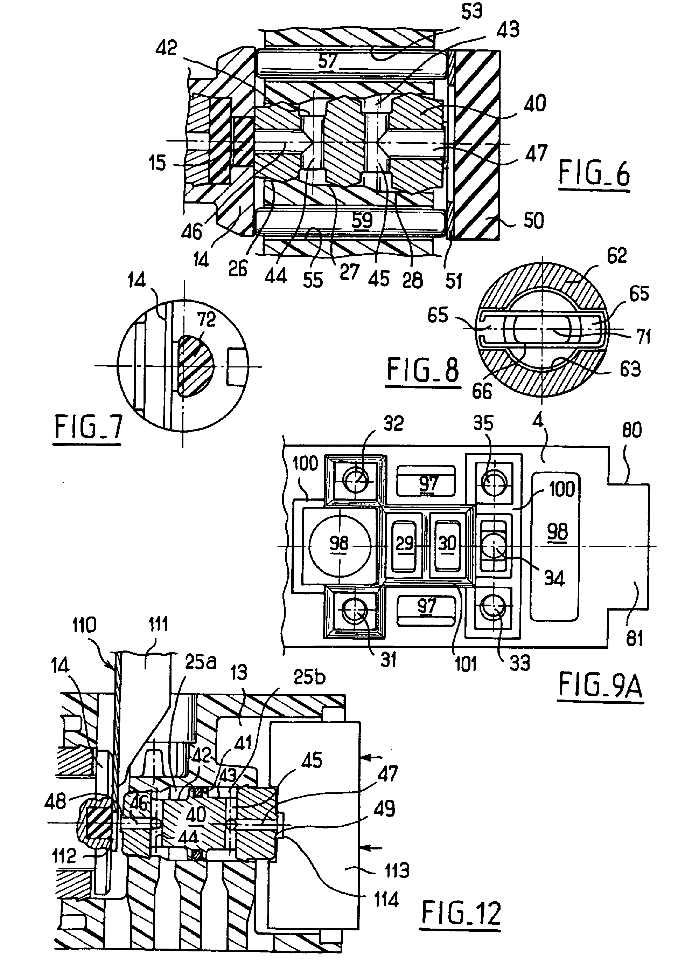

L'électrovanne comporte une pièce fonctionnelle 40 logée à force dans l'évidement 25 du noyau 20 de la chambre 13, cette pièce 40 étant de forme sensiblement cylindrique avec, dans la variante de réalisation des figures 1 et 6, une surface extérieure qui comporte trois jeux de crampons annulaires pour coopérer avec les sections 26, 27 et 28 de l'évidement 25 afin d'y retenir la pièce 40. Dans la variante représentée à la figure 12, d'une part l'évidement 25 ne possède que deux sections cylindriques étagées et d'autre part la pièce 40 ne possède que deux crampons annulaires pour coopérer avec respectivement chacune des sections cylindriques de l'évidement 25. Entre les deux crampons, la pièce 40 porte un joint torique 41 qui assure l'étanchéité entre les deux portions 25a et 25b de l'évidement 25 que ce joint 41 détermine entre les crampons.

Entre les crampons ou entre les crampons et le joint d'étanchéité, la pièce 40 possède deux gorges extérieures 42, 43 dans lesquelles débouchent respectivement deux conduits transversaux 44 et 45. De chacun de ces conduits transversaux, partent deux tronçons de conduits axiaux 46, 47 débouchant sur les faces d'extrémité axiales de la pièce 40. Autour de ce débouché, chacune des faces axiales de la pièce 40 possède un petit bourrelet 48, 49 qui forme un siège sur lequel peut s'appliquer un clapet, tel que le clapet 15 pour le siège 48 tourné vers l'électro-aimant.

Un deuxième clapet 50 est monté dans la chambre 13 en regard de l'extrémité axiale de la pièce 40 qui porte le siège 49. Ce clapet 50 est également en un matériau élastomère. Dans la mesure où ce matériau élastomère n'est pas de dureté suffisante, le clapet 50 est surmonté sur sa face tournée en direction du siège, d'une rondelle métallique 51 qui recouvre sa périphérie. Entre ce clapet 50 et le bouchon 18 on a disposé un ressort 52 qui tend à repousser le clapet 50 en direction du siège 49 mais avec un effort beaucoup moindre que celui du ressort 10 qui tend à plaquer avec le noyau 9 le clapet 15 contre le siège 48.

Dans les parois radiales 22, 23, on a ménagé des orifices 53, 54, 55, 56 dans lesquels sont montées libre en coulissement des entretoises 57, 58, 59, 60. Ces entretoises sont parallèles à l'axe 2 et leur dimension longitudinale est telle que, les clapets étant en permanence sollicités en rapprochement l'un vers l'autre sous l'effet du ressort 52, elles maintiennent leur écartement à une valeur qui, mesurée entre les surfaces actives des clapets c'est-à-dire entre les zones de surface centrale qui coopèrent avec les sièges, est égale à la dimension axiale de la pièce 40 augmentée de la course désirée des clapets. En d'autres termes, la longueur de ces entretoises serait supérieure à la longueur axiale de la pièce 40 d'une valeur égale à cette course si le clapet 50 était dépourvu de la rondelle métallique 51, ce qui peut être le cas lorsque le matériau des clapets est de dureté suffisante lui permettant de résister à l'enfoncement des entretoises et ce pendant la durée de vie de l'électrovanne. En présence de la rondelle 51, cette valeur est diminuée de l'épaisseur de la rondelle 51.

La partie du corps 1 qui sépare la chambre 13 de la surface supérieure 3 est pourvue d'un orifice 61 dont la fonction principale est de loger une commande manuelle de l'électrovanne. Dans cet orifice 61 on a mis en place un insert 62 cylindrique pourvu de crampons extérieurs pour sa fixation lors de son enfoncement à force dans l'orifice 61, qui présente un alésage cylindrique 63 avec un épaulement supérieur 64, l'extrémité de cet insert 62 étant pourvue d'une fente diamétrale 65 recevant une épingle élastique 66. Cette épingle élastique 66 repose sur un épaulement 67 inférieur de l'orifice 61.

A l'intérieur de l'alésage 63, on a logé un organe de came 70 tournant de manière étanche dans l'alésage 63 sous l'épaulement 64 et comportant une partie méplate 71 qui traverse l'épingle 66. Sous cette partie 71, l'organe 70 se prolonge par une came 72 qui, dans l'orientation angulaire que lui impose l'épingle 66, est écartée de la partie périphérique de la surface radiale du plateau 14 et qui, lorsqu'on manoeuvre en rotation l'organe 66 dans l'alésage 63, à l'encontre de l'effet élastique de rappel de l'épingle 66, vient au contact de ce plateau pour repousser le noyau mobile de l'électro-aimant en direction de sa culasse. La manoeuvre en rotation de cet organe 70 est permise grâce à une fente 73 accessible depuis l'extérieur de l'électrovanne pour un outil tel qu'un tournevis. Cette commande manuelle peut être également réalisée, dans une variante non représentée, par un simple poussoir à pente, qui pénètre dans la chambre 13, contre l'effort d'un ressort de rappel, pour repousser le plateau 14.

Du côté de son extrémité pourvue du bouchon 18, le corps 1 comporte une extension axiale 80 formant un talon inférieur susceptible d'être glissé dans un logement prévu à cet effet sur le distributeur ou l'embase auxquels est destinée l'électrovanne. La surface inférieure 81 du talon 80 est coplanaire à la surface de pose 4 de l'électrovanne.

A son autre extrémité, le corps 1 contient toute une circuiterie électrique et électronique 82 d'alimentation et de protection contre les surtensions de la bobine de l'électro-aimant, circuiterie dont les bornes d'entrée et sortie sont formées par deux broches 83, 84 en forme de dents sensiblement perpendiculaires à la surface de pose 4 et dont le profil le plus extrême 85 dans un plan parallèle au plan de la figure 1 est en forme sensiblement d'arc de cercle dont le centre est situé au voisinage de l'excroissance du talon 80. Ce profil facilitera l'embrochage et le débrochage de l'électrovanne dans ou hors des bornes femelles portées par une embase associée au distributeur auquel l'électrovanne sera fixée ou par un connecteur de ce distributeur. En effet, le mouvement naturel de mise en place de l'électrovanne consiste d'abord à loger le talon 80 dans le logement qui doit le recevoir, l'électrovanne étant légèrement inclinée vers le bas du côté de ce logement, puis de faire basculer cette électrovanne autour de la pseudo-articulation que constitue le talon placé dans ce logement afin de réaliser l'embrochage électrique.

Le corps 1 est enfin coiffé d'un embout ou capot 90 également en matière plastique, rapporté par collage avec emmanchement à force ou soudage à froid dans une réserve 91 prévue à la surface extérieure du corps 1. Ce capot comportera dans sa partie d'emmanchement des fentes 92 pour chevaucher les broches 83, 84. Il pourra également comporter une partie transparente supérieure 93 au travers de laquelle on pourra apercevoir le rayonnement d'une diode électroluminescente témoin 86 appartenant au circuit 82. Enfin, le capot sera pourvu d'une patte extrême 94 destinée à recevoir une vis de fixation 95.

La technique de fabrication du corps 1 par injection demande de supprimer au maximum les parties massives de matière plastique à injecter. C'est pour cela que le corps 1 présente un certain nombre d'évidements externes formant réserve tels que ceux notés 96, 97 et 98 sur les figures. L'évidement 96 pourra être recouvert d'une plaque 99 maintenue attelée au corps par l'insert 62 appartenant à la commande manuelle tandis que l'un des évidements 98 pourra recevoir avantageusement un insert métallique présentant un ou deux orifices filetés formant un moyen de fixation alternatif au talon 80 ou à la vis 95.

La surface de pose 4 possèdera un rainurage 100 entourant chacun des débouchés des conduits 29, 30, 31, 32, 33, 34 et 35 afin d'assurer l'étanchéité de la connexion de ces orifices avec les orifices complémentaires qui seront prévus sur le corps du distributeur ou de l'embase. Selon la mise ou non en service des amorces de conduits 31, 32, 33, 34, 35, on choisira le joint plan de forme adaptée aux étanchéités à réaliser.

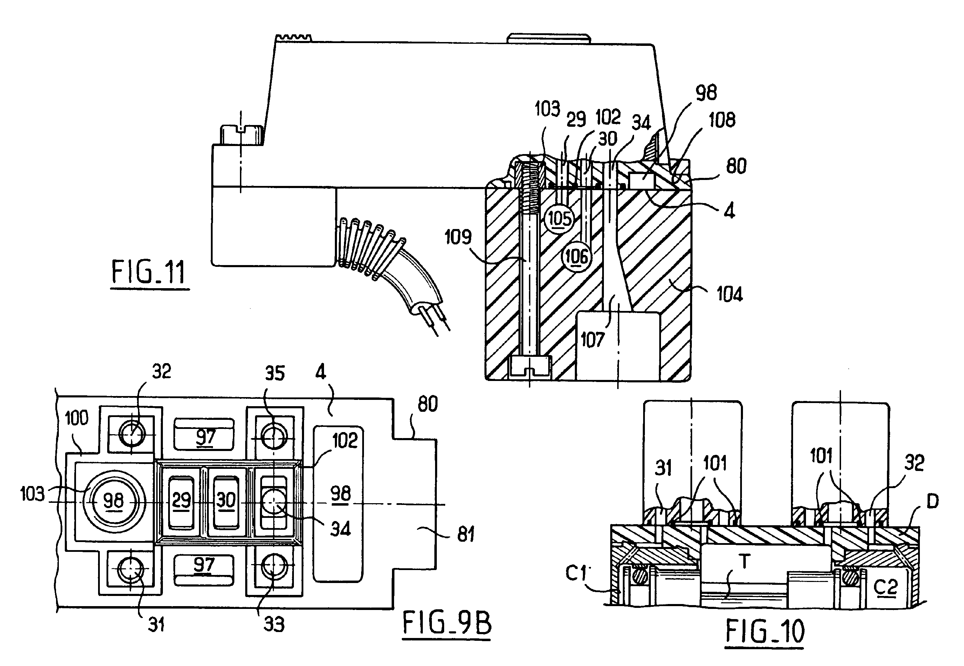

C'est ainsi que la figure 9A illustre un joint 101 qui isole les orifices 29, 30, 31 et 32. La figure 10, par une coupe partielle schématique, illustre le fait que, sur un distributeur D, le pilotage du tiroir T s'opère par deux électrovannes selon l'invention, l'une ayant son conduit 31 relié à une chambre de pilotage C1 et l'autre ayant son conduit 32 relié à une chambre de pilotage C2. Les surfaces de pose des électrovannes sont équipées d'un joint 101 (figure 9A) et les amorces de conduits 33, 34, 35 ne sont pas percées.

La figure 9B illustre un joint 102 de configuration différente et la réserve 98 pourvue d'un insert taraudé 103. Le joint 102 entoure les orifices 29, 30 et 34 en les isolant, ce dernier orifice 34 communiquant avec la chambre 13 par percement de son fond 37 (figure 5). Les conduits 31 et 32 sont laissés dans ce cas à l'état d'amorces, de même que les amorces 33 et 35. Le cas d'emploi de l'électrovanne est illustré par la figure 11. L'électrovanne est connectée à une embase 104 pourvue d'une canalisation de pression 105, d'un commun d'échappement 106, et d'une sortie 107. La fixation de l'électrovanne sur l'embase est assurée par coopération du talon 80 avec un logement 108 qu'elle comporte à cet effet et par une vis 109 coopérant avec l'insert 103.

A la figure 12 on a illustré schématiquement le procédé de mise en place de la pièce 40 porte-sièges à l'intérieur de la chambre 13 donc à l'intérieur du logement 25 de son noyau 20. A ce stade du montage de l'électrovanne, le noyau plongeur 9 de l'électro-aimant est placé dans son logement avec le clapet 15 à l'intérieur de la chambre 13. La partie pneumatique de l'électrovanne, celle de droite sur la figure 1, n'est pas encore équipée de sa commande manuelle, ce qui permet d'introduire dans la chambre 13, transversalement à l'axe 2, une cale d'épaisseur 110 dont la partie active est en forme de fourche 112 prolongée par une partie de préhension ou de manoeuvre 111, cette fourche ayant pour fonction d'éviter que le siège 48 ne porte directement sur la cale d'épaisseur et soit endommagé par ce contact. L'épaisseur des branches de la fourche sera égale à la course désirée augmentée de la hauteur de la saillie que forme le siège 48 par rapport à la face terminale de la pièce 40 qui le porte. Grâce à un outillage de poussée 113, après avoir mis en place la cale d'épaisseur 110, on introduit à force la pièce 40 dans le logement 25. Au cours de sa pénétration, la pièce 40 entre en contact avec la cale d'épaisseur 110, la repousse en direction de la culasse de l'électro-aimant en entraînant ainsi le noyau plongeur à l'encontre de l'effet du ressort 10 jusqu'à ce que le noyau vienne en butée sur cette culasse. A cet instant la pièce 40 est mise parfaitement en place et la position des sièges 48 et 49 est optimale pour bénéficier d'une course efficace de l'électro-aimant. On aura noté que l'outil de poussée 113 présente une surface active évidée 114 en son centre pour préserver l'intégrité du bourrelet 49 formant siège pour le clapet 50.

Pour terminer le montage de l'électrovanne il suffira de mettre en place les entretoises 57 à 60 dans leurs orifices, la rondelle 51, le clapet 50 et le ressort 52 et de refermer l'orifice 17 par le chapeau 18 cramponné. On terminera enfin par la mise en place de l'organe de commande manuelle.

Une variante de ce procédé de mise en place de la pièce 40 porte-sièges à l'intérieur de la chambre 13 consiste à opérer de la manière suivante. Avant l'introduction de la pièce 40 par l'outil 113, on met en place les entretoises 57 à 60 dans les logements 53 à 56 ménagés dans les parois radiales 22 et 23. On force ensuite la pénétration de la pièce 40 à l'aide de l'outil 113 jusqu'à ce que cet outil butte sur les entretoises 57 à 60 et jusqu'à ce qu'elles-mêmes soient arrêtées en translation par le noyau 9 qui est parvenu en butée contre la culasse 7. Le plan de poussée des entretoises sur l'outil 113 sera identique à celui qui contient le siège 49 de sorte que lorsque l'enfoncement sera stoppé la pièce 40 sera à la position précise souhaitée pour l'optimisation de la course électromagnétique. Cette variante présente l'avantage, sur le procédé avec cale d'épaisseur, de supprimer le recours à cette dernière qui est de taille réduite donc fragile et d'extraction difficile après enfoncement.

On expliquera brièvement le fonctionnement d'une telle électrovanne. Le conduit 29 communique avec une source de pression via le distributeur ou l'organe équipé de l'électrovanne. Lorsque l'électro-aimant n'est pas excité, le ressort 10 plaque le clapet 15 contre le siège 48 et repousse le clapet 50 à l'encontre de l'effet du ressort 52 au moyen des entretoises 57 à 60. Le conduit 31, 32 ouvert librement dans la chambre 13, communique donc avec le conduit 30 qui est relié par exemple à un conduit commun de collecte d'échappement, via la chambre 13, le conduit 47 qui y débouche au travers du siège 49 découvert, le conduit 45 et la gorge 43.

Lorsque l'on excite l'électro-aimant, le noyau est rapidement et franchement rappelé contre la culasse 7 ce qui permet au ressort 52 de repousser l'équipage mobile que forme le clapet 50, la rondelle 51 et les entretoises 57 à 60. Le clapet 50 vient donc fermer la communication entre le conduit 47 et la chambre 13, le conduit 44 de pression étant alors ouvert sur la chambre 13 et la pression issue du conduit 29 envahit le conduit 31, 32. Il y a donc une pression qui parvient à une chambre de pilotage du distributeur équipé par l'électrovanne lui permettant de changer d'état ou qui parvient à tout autre organe que l'électrovanne est chargée d'alimenter. Lorsque l'électro-aimant 6 cesse d'être excité, cette chambre de pilotage ou cet organe est alors purgé parce que mis à l'échappement car le ressort 10 de l'électro-aimant commute les communications à l'intérieur de la chambre 13.

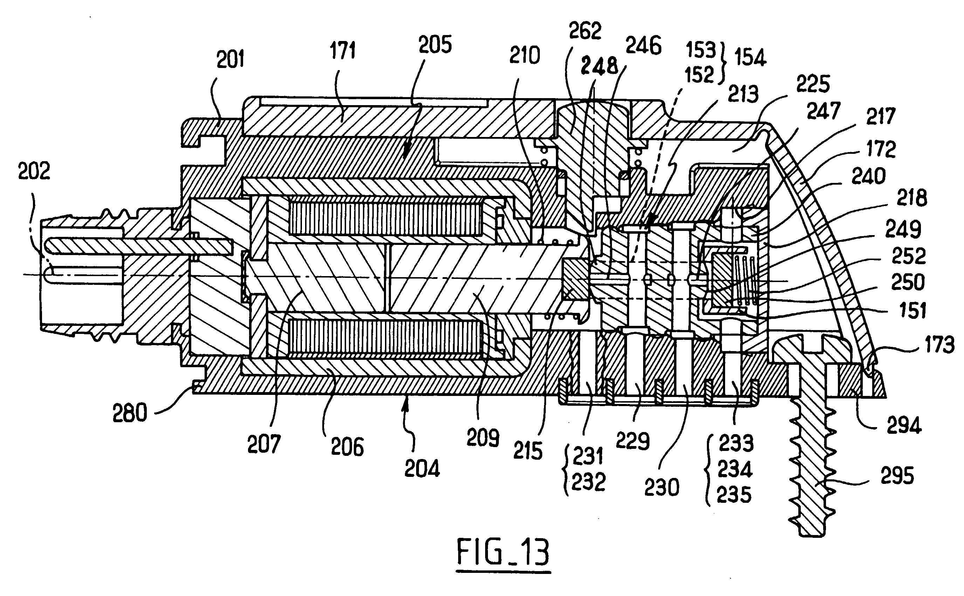

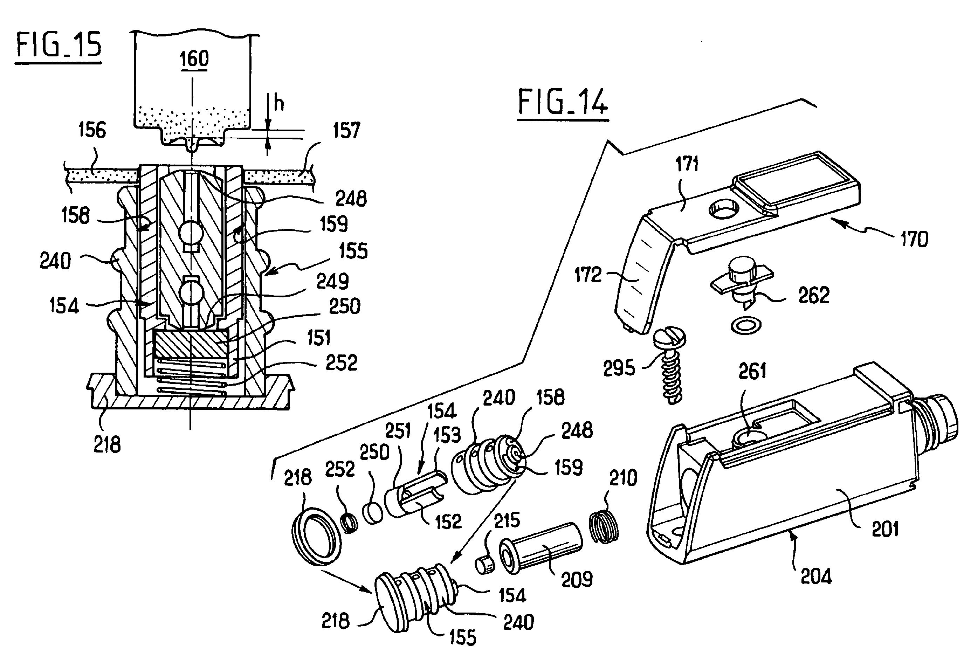

La variante de réalisation de l'électrovanne selon l'invention représentée aux figures 13 et 14 reprend la plupart des éléments déjà décrits avec des références incrémentées d'une valeur 200. C'est ainsi qu'elle présente un corps 201 allongé, possédant un axe général 202, de forme parallélépipédique, donc de section transversale sensiblement rectangulaire. Extérieurement ce corps présente une surface inférieure 204, parallèle à l'axe 202 et formant la surface de pose de l'électrovanne. Il comprend deux sections principales. Une première section 205 est surmoulée sur un électro-aimant 206 avec une armature, une bobine et une culasse 207. Le noyau plongeur 209 est écarté par le ressort 210 en l'absence d'excitation. L'extrémité du noyau plongeur opposée à la culasse pénètre à l'intérieur d'une deuxième section 213 du corps 201 qui contient la chambre pneumatique de l'électrovanne. Cette extrémité est équipée d'un premier clapet 215 de l'électrovanne. L'évidement du corps 201 qui constitue cette chambre 213 débouche par une large ouverture 217 à l'une des extrémités longitudinales du corps 201 opposée à celle qui contient l'électro-aimant. La chambre pneumatique 213 possède un évidement central 225 d'axe 202 cylindrique, formé comme dans la variante déjà décrite, de trois sections cylindriques étagées. De la même manière, deux conduits 229 et 230 débouchant dans l'évidement 225 par l'une de leurs extrémités tandis que leur autre extrémité débouche à l'extérieur du corps 201 au travers de la surface de pose 204.

Les conduits 231 à 235 ont le même rôle que les conduits 31 à 35 des figures précédentes.

L'électrovanne comporte une pièce fonctionnelle 240 logée à force dans l'évidement 225 de la chambre 213, cette pièce 240 étant de forme sensiblement cylindrique avec une surface extérieure qui comporte trois jeux de crampons annulaires pour coopérer avec l'évidement 225 afin d'y retenir la pièce 240.

Comme dans la réalisation précédente, entre les crampons, la pièce 240 possède deux gorges extérieures dans lesquelles débouchent respectivement deux conduits transversaux. De chacun de ces conduits transversaux, partent deux tronçons de conduits axiaux 246, 247 débouchant sur les faces d'extrémité axiales de la pièce 240. Autour de ce débouché, chacune des faces axiales de la pièce 240 forme un siège 248, 249 sur lequel peut s'appliquer un clapet, donc le clapet 215 pour le siège 248 tourné vers l'électro-aimant.

Le deuxième clapet 250 est monté en regard du siège 249. Entre ce clapet 250 et un bouchon 218, un ressort 252 tend à repousser le clapet 250 en direction du siège 249 mais avec un effort beaucoup moindre que celui du ressort 210 qui tend à plaquer le clapet 215 contre le siège 248.

Dans cette variante de réalisation, le second clapet 250 est disposé dans une coupelle 151 à fond ouvert prolongée par deux branches-entretoises 152, 153, le tout formant un étrier 154. Les branches 152, 153 traversent librement la pièce 240 en encadrant les conduits internes pour que leur extrémité libre soit voisine du siège 248 voisin du clapet 215. Elles jouent le rôle des entretoises de la variante précédente et leur longueur est ajustée en conséquence.

Dans un mode de réalisation avantageux de cette seconde variante de réalisation, l'équipage mobile que forment l'étrier 154 et le clapet 250, le ressort 252, la pièce (insert) porte-sièges 240 et le bouchon 218 est préassemblé en une cartouche 155 comme illustré par les figures 14 et 15. On constate sur ces figures que l'étrier et le ressort sont maintenus engagés dans l'insert 240 par le bouchon 218 qui est solidarisé par tout moyen à l'insert. Dans cet état, le clapet 250 est plaqué contre le siège 249.

L'un des intérêts de cette variante réside dans le choix de réaliser les pièces 240 et 154 par moulage (injection) de matière plastique. On obtient un coût de fabrication beaucoup moins élevé que par décolletage comme décrit précédemment mais ceci au détriment de la précision dimensionnelle des pièces. Or celle-ci, comme on l'a vu plus haut, est capitale pour obtenir de bonnes performances de fonctionnement de l'électrovanne.

Pour remédier à cela, on procède à une reprise de la cartouche 155 assemblée comme illustré par la figure 15. Cette reprise consiste, dans un outillage adéquat, à immobiliser l'étrier 154 par rapport à l'insert 240 (par exemple au moyen de mâchoires 156, 157 qui plaquent les branches 152, 153 de l'étrier contre la surface interne des orifices traversant 158, 159 où elles sont logées) puis à appliquer un outil de forme 160 destiné à conformer à la fois l'extrémité de ces branches 152, 153 et le siège 248 de l'insert 240. Cet outil peut être de toute nature appropriée. De manière préférée cependant, il sera réalisé sous forme d'un poinçon chaud qui procèdera à cette conformation par fusion partielle des deux pièces au contact desquelles il sera porté sous une pression et pendant un temps déterminés.

On assure ainsi à chaque cartouche un décalage axial de valeur précise entre l'extrémité libre des branches 152, 153 et le siège 248 égal à la dimension notée h sur la figure 15 au nez de l'outil, dimension qui correspond précisément à la course pneumatique voulue.

La cartouche 155 forme alors une unité qui est insérée dans la section 213 du corps 201 par enfoncement à force dans l'alésage 225. Lors de cette insertion contrôlée l'étrier prend appui sur l'extrémité du noyau 209, s'efface pour que le siège 248 vienne au contact du clapet 215. Une poursuite de l'enfoncement entraîne donc un déplacement vers la culasse 207 du noyau 209. On a constaté qu'en alimentant l'électro-aimant sous une tension déterminée, on provoque l'attraction du noyau contre la culasse pour une valeur déterminée de l'entrefer. On a donc déterminé la tension de référence pour que cette valeur corresponde à la course souhaitée du noyau. On arrête donc l'enfoncement de la cartouche au moment où le noyau est attiré vers la culasse alors que l'électro-aimant est alimenté sous cette tension de référence. Un signal simple de cette attraction brutale peut être la pression qui s'établit dans les conduits 231, 232 - alors que le conduit 129 est connecté à une source de pression - du fait du décollement du clapet 215 par rapport au siège 248.

Le corps 201 est pourvu d'un orifice 261 dont la fonction principale est de loger une commande manuelle de l'électrovanne 262 qui agit comme précédemment décrit sur le noyau 209.

On notera encore quelques détails différenciant cette variante de réalisation de la précédente :
- le talon 280 est ici situé du côté de l'électro-aimant,
- la patte 294 est quant à elle en une seule pièce avec le corps 201 et située à l'extrémité "pneumatique" de l'électrovanne. Elle reçoit une vis de fixation 295 autotaraudeuse,
- le capotage de l'électrovanne est réalisé par une pièce unique 170 comportant une partie 171 destinée à être encliquetée sur le corps 201 et un volet 172 articulé à la partie 171 pour couvrir la patte 294 et s'y encliqueter par une languette 173 de son extrémité libre inférieure.

## Revendications

1. Electrovanne miniature comportant :
- un corps d'électrovanne (1, 201),
- un électro-aimant avec une culasse (7, 207) solidaire du corps et un noyau plongeur (9, 209) mobile par rapport à la culasse le long d'un axe longitudinal (2, 202) de l'électro-aimant,
- une chambre pneumatique (13, 213) ménagée dans le corps du côté d'une extrémité du noyau plongeur opposée à la culasse, dans laquelle chambre débouche librement un premier conduit (31, 32 ; 231, 232) et, chacun au travers d'un siège (48, 49 ; 248, 249), un deuxième et un troisième conduits (29, 30 ; 229, 230), les débouchés des deuxième et troisième conduits étant coaxiaux à l'axe longitudinal (2, 202) de l'électro-aimant et à l'opposé l'un de l'autre,
- un premier (15, 215) et un second clapet (50, 250), encadrant avec jeu les deux sièges, le premier clapet étant porté par le noyau plongeur et le second clapet étant porté par un équipage mobile maintenu au contact du noyau plongeur par un organe élastique de rappel (52, 252) pour être déplacé avec ce dernier entre une première position correspondant à l'état excité de l'électroaimant dans laquelle le noyau plongeur est en butée contre la culasse et une seconde position correspondant à l'absence d'excitation de l'électro-aimant dans laquelle le premier clapet (15, 215) est en appui contre son siège (48, 248), **caractérisée en ce que** les deux sièges (48, 49 ; 248, 249) sont ménagés à l'extrémité d'une pièce porte-sieges unique (40, 240) qui comporte intérieurement les extrémités (46, 47 ; 246, 247) des deuxième et troisième conduits, cette pièce étant rapportée dans le corps (1, 201) de l'électrovanne dans la direction de l'axe commun (2, 202) à l'électro-aimant et aux sièges et immobilisée dans une position précise le long de cet axe et propre à chaque électrovanne.

2. Electrovanne selon la revendication 1, **caractérisée en ce que** l'équipage mobile comprend un jeu d'entretoises (57, 58, 59, 60) s'étendant entre les clapets, à l'extérieur de ladite pièce porte-sièges (40), dont la longueur est égale à la distance séparant les deux sièges (48, 49) augmentée de la course désirée de chacun des clapets (15, 50).

3. Electrovanne selon la revendication 2, **caractérisée en ce que** la face du second clapet (50) tournée vers son siège (49) est surmontée d'une rondelle périphérique (51) d'appui des entretoises (57-60), la distance séparant la surface d'appui des entretoises de la surface de la partie active du clapet (50) venant en diminution de la longueur des entretoises (57-60).

4. Electrovanne selon la revendication 2, **caractérisée en ce que** la pièce (40) portant les sièges et les entretoises (57,58,59,60) sont métalliques et réalisées par usinage.

5. Electrovanne selon la revendication 1, **caractérisée en ce que** l'équipage mobile est formé par un étrier (154) en matière thermoplastique comprenant une coupelle (151) de maintien du second clapet (250) prolongé en une seule pièce par au moins deux branches longitudinales (152, 153) parallèles à l'axe commun susdit, traversant la pièce porte-sièges (240) et dont les extrémités libres sont situées de part et d'autre part du siège (248) situé en regard du premier clapet (215).

6. Electrovanne selon la revendication 5, **caractérisée en ce que** l'équipage mobile et la pièce porte-sièges (240) également en matière thermoplastique sont réalisés sous forme d'une cartouche (155) préassemblée comportant ladite pièce (240), l'équipage mobile avec le second clapet (250), un bouchon fixé (218) sur la pièce porte-siège du côté du second clapet et un organe élastique de rappel (252) placé entre le bouchon et le second clapet.

7. Electrovanne selon la revendication 1, **caractérisée en ce que** la pièce (40, 240) porte-sièges est de révolution pourvue extérieurement de trois moyens de cramponnage axialement espacés les uns des autres pour sa fixation dans le corps (1, 201) en matière plastique et entre ces moyens de cramponnage, de deux gorges extérieures (25a, 25b, 42, 43) formant des sections des deuxième et troisième conduits, entre leur portion terminale ménagée dans la pièce (40, 240) et leur portion (29, 30 ; 229, 230) ménagée dans le corps, ces sections étant étanches entre elles et à l'égard de la chambre pneumatique (13, 213).

8. Electrovanne selon la revendication 1, **caractérisée en ce que** le corps (1, 201) en matière plastique est pourvu d'une surface extérieure plane (4, 204) de pose, parallèle à l'axe longitudinal susdit (2, 202) avec une patte de fixation (94, 294) à l'une de ses extrémités et un talon d'accrochage (80, 280) à son autre extrémité.

9. Electrovanne selon la revendication 8, **caractérisée en ce que** le corps (201) est équipé à l'opposé de sa surface de pose (204) d'un capot encliquetable (170) possédant un volet (172) articulé de masquage de la patte de fixation (294).

10. Electrovanne selon la revendication 8, **caractérisée en ce que** le corps (201) est surmoulé sur les parties fixes de l'électro-aimant et possèdent un évidement central ouvert à son extrémité opposée à l'électro-aimant, formant la chambre pneumatique (13, 213) et pourvue d'un obturateur (18, 218) rapporté de manière définitive sur le corps (1, 201).

11. Electrovanne selon la revendication 10, **caractérisée en ce que** le corps (1) forme dans la chambre pneumatique (13), un noyau central (20) pourvu d'un évidement (25) équipé de la pièce (40) porte-sièges et relié au reste du corps par au moins une paroi (24) s'étendant sensiblement perpendiculairement à la surface extérieure de pose et dans laquelle sont ménagés les deuxième et troisième conduits (29, 30).

12. Electrovanne selon la revendication 11, **caractérisée en ce que** la partie de corps (1) formant la paroi latérale de la chambre pneumatique (13) est pourvue d'un orifice (61) débouchant d'une part dans la zone contenant le siège (48) le plus proche de l'électro-aimant et d'autre part, à la surface extérieure (3) du corps (1) opposée à la surface de pose (4).

13. Electrovanne selon la revendication 11, **caractérisée en ce que** l'orifice (61) susdit est équipé d'un organe (70) de commande manuelle qui comporte un doigt (72) d'actionnement du noyau plongeur (9) de l'électro-aimant coopérant avec l'extrémité de ce dernier.

14. Electrovanne selon la revendication 8, **caractérisée en ce que** les trois conduits susdits (29, 229; 30, 230 ; 31, 231 -32, 232) débouchent à l'extérieur du corps au travers de sa surface de pose (4, 204).

15. Electrovanne selon la revendication 14, **caractérisée en ce que** le premier conduit comporte deux branches (31, 32 ; 231, 232) séparées, symétriques l'une de l'autre par rapport à un plan perpendiculaire à la surface de pose (4, 204) et passant par l'axe longitudinal (2, 202) du corps.

16. Electrovanne selon la revendication 15, **caractérisée en ce que** le corps (1, 201) possède au moins une amorce (33, 34, 35 ; 233, 234, 235) d'une branche supplémentaire du premier conduit, perpendiculaire à la surface de pose (4, 204) et dont le fond (36, 37, 38) constitue une paroi à percer pour établir une communication permanente entre cette amorce et la chambre pneumatique (13, 213).

17. Procédé de montage de la pièce porte-sièges dans le corps de l'électrovanne selon la revendication 2, **caractérisé en ce qu'**il consiste à mettre en place les entretoises (57-60) dans le corps (1) et à enfoncer à force la pièce (40) porte-sièges dans la chambre pneumatique par un outil (113) qui pousse également les entretoises (57-60) au travers de l'ouverture (17) avant mise en place de l'obturateur jusqu'à provoquer la mise en butée du noyau (9) de l'électro-aimant contre sa culasse (7) par l'intermédiaire des entretoises.

18. Procédé de montage de la pièce porte-sièges dans le corps de l'électrovanne selon la revendication 12, **caractérisé en ce qu'**il consiste à introduire par l'orifice latéral (61) de logement de l'organe de commande manuelle avant sa mise en place, une cale d'épaisseur (110) devant l'électro-aimant, l'épaisseur de la cale étant égale à la course désirée des clapets (15, 50), à enfoncer à force la pièce (40) porte-sièges dans la chambre pneumatique (13) par un outil (113) introduit par l'ouverture (17) d'extrémité de celle-ci avant mise en place de l'obturateur jusqu'à provoquer la mise en butée du noyau (9) de l'électro-aimant contre sa culasse (7) et à retirer la cale d'épaisseur (110).

19. Procédé de fabrication d'une électrovanne selon la revendication 6, **caractérisé en ce qu'**il consiste à réaliser l'assemblage de la cartouche (155), à calibrer la distance axiale mesurée entre les extrémités libres des branches (152, 153) de l'étrier (154) et le siège (248) situé en regard du premier clapet (215) et à procéder à l'emmanchement contrôlé à force de la cartouche (155) dans le corps (201) de l'électrovanne jusqu'à obtenir un écartement précis entre le premier clapet (215) et son siège (248) lorsque le noyau plongeur (209) est en appui sur la culasse (207).

20. Procédé selon la revendication 19, **caractérisé en ce que** le calibrage susdit est réalisé par une fusion partielle du siège (248) et des extrémités des branches (152, 153) de l'étrier (154) au moyen d'un outil de forme (160) appliqué à chaud sur l'extrémité correspondante de la cartouche.

21. Procédé selon la revendication 19, **caractérisé en ce que** pour obtenir l'écartement précis susdit, on soumet, pendant l'enfoncement de la cartouche (155) dans le corps (201) de l'électrovanne, l'électro-aimant à une alimentation de référence tendant à attirer le noyau plongeur (209) contre la culasse (207) et à stopper l'enfoncement quand le décollement du premier clapet (215) de son siège (248) est constaté.

## Claims

1. A miniature solenoid valve comprising:
· a valve body (1, 201);
· an electromagnet having a yoke (7, 207) secured to the body and a plunger core (9, 209) movable relative to the yoke along a longitudinal axis (2, 202) of the electromagnet;
· a pneumatic chamber (13, 213) formed in the body adjacent to the end of the plunger core that faces away from the yoke, into which chamber there opens out freely a first duct (31, 32; 231, 232) and, each via a respective seat (48, 49; 248, 249), second and third ducts (29, 30; 229, 230), with the openings of the second and third ducts facing in opposite directions and being coaxial about the longitudinal axis (2, 202) of the electromagnet; and
· first and second valve members (15, 50; 215, 250) facing the respective seats with clearance, the first valve member being carried by the plunger core and the second valve member being carried by moving equipment held in contact with the plunger core by a resilient return member (52, 252) so as to be moved together with the plunger core between a first position corresponding to the electromagnet being in the excited state in which the plunger core is in abutment against the yoke, and a second position corresponding to the absence of electromagnetic excitation in which the first valve member (15, 215) bears against its seat (48, 248), the valve being **characterized in that** the two seats (48, 49; 248, 249) are provided at respective ends of a single seat-carrier piece (40, 240) which includes internally the ends (46, 47; 246, 247) of the second and third ducts, said piece being engaged in the body (1, 201) of the valve along the common axis (2, 202) of the electromagnet and the two seats, and being immobilized in a precise position along said axis and specific to each valve.

2. A valve according to claim 1, **characterized in that** the moving equipment has a set of spacers (57, 58, 59, 60) extending between the valve members, outside said seat-carrier piece (40), the length of the spacers being equal to the distance between the two seats (48, 49) plus the length of the stroke desired for each of the valve members (15, 50).

3. A valve according to claim 2, **characterized in that** the face of the second valve member (50) facing its seat (49) is surmounted by a peripheral washer (51) for bearing against the spacers (57-60), the length of the spacers (57-60) being shortened to compensate by an amount equal to the distance between the bearing surface for the spacers and the surface of the active portion of the valve member (50).

4. A valve according to claim 2, **characterized in that** the piece (40) carrying the seats and the spacers (57, 58, 59, 60) are made of metal and are machined.

5. A valve according to claim 1, **characterized in that** the moving equipment is formed by a fork (154) of thermoplastic material, comprising a cup (151) for supporting the second valve member (250) and extended integrally by at least two longitudinal branches (152, 153) extending parallel to said common axis, the forks passing through the seat-carrier piece (240) and having their free ends situated on either side of the seat (248) situated facing the first valve member (215).

6. A valve according to claim 5, **characterized in that** the moving equipment and the seat-carrier piece (240), also made of thermoplastic material, are implemented in the form of a preassembled cartridge (155) comprising said piece (240), the moving equipment with the second valve member (250), a stopper (218) fixed on the seat-carrier piece adjacent to the second valve member, and a resilient return member (252) placed between the stopper and the second valve member.

7. A valve according to claim 1, **characterized in that** the seat-carrier piece (40, 240) is a body of revolution provided on the outside with three spike means that are axially spaced apart from one another for fixing the piece in the body (1, 201) of plastics material, and two outer grooves (25a, 25b, 42, 43) between the spike means forming sections of the second and third ducts between their terminal portions formed inside the piece (40, 240) and their portions (29, 30; 229, 230) formed inside the body, said sections being isolated from each other and from the pneumatic chamber (13, 213).

8. A valve according to claim 1, **characterized in that** the plastic material body (1, 201) is provided with a plane outside surface (4, 204) for installation purposes extending parallel to the above-mentioned longitudinal axis (2, 202) and having a fixing tab (94, 294) at one end and a fastening lug (80, 280) at its other end.

9. A valve according to claim 8, **characterized in that** the body (201) is fitted on its side remote from its installation surface (204) with a snap-fastenable cap (170) having a hinged flap (172) for masking the fixing tab (294).

10. A valve according to claim 8, **characterized in that** the body (201) is overmolded onto the fixed portions of the electromagnet and possesses a central recess open at its end remote from the electromagnet to form the pneumatic chamber (13, 213) and provided with a stopper (18, 218) that is fitted to the body (1, 201) in definitive manner.

11. A valve according to claim 10, **characterized in that** the body (1) forms a central core (20) in the pneumatic chamber (13), the central core being provided with a recess (25) fitted with the seat-carrier piece (40) and connected to the remainder of the body via at least one wall (24) extending substantially perpendicularly to the external installation surface and having the second and third ducts (29, 30) formed therein.

12. A valve according to claim 11, **characterized in that** the portion of the body (1) forming the side wall of the pneumatic chamber (13) is provided with an orifice (61) opening out firstly into the zone containing the seat (49) that is closer to the electromagnet, and secondly to the outside surface (3) of the body (1) that is remote from the installation surface (4).

13. A valve according to claim 11, **characterized in that** said orifice (61) is fitted with a manual control member (70) having a finger (72) for actuating the plunger core (9) of the electromagnet and co-operating with the end thereof.

14. A valve according to claim 8, **characterized in that** said three ducts (29, 229; 30, 230; 31, 231 - 32, 232) open to the outside of the body through the installation surface (4, 204) thereof.

15. A valve according to claim 14, **characterized in that** the first duct has two separate branches (31, 32; 231, 232) that are symmetrical to each other about a plane perpendicular to the installation surface (4, 204) and that contains the longitudinal axis (2, 202) of the body.

16. A valve according to claim 15, **characterized in that** the body (1, 201) possesses at least one beginning (33, 34, 35; 233, 234, 235) of an additional branch of the first duct, extending perpendicularly to the installation surface (4, 204) and having an end wall (36, 37, 38) which constitutes a wall to be pierced in order to establish permanent communication between said beginning of a duct and the pneumatic chamber (13, 213).

17. A method of assembling the seat-carrier piece in the body of a valve according to claim 2, the method being **characterized in that** it consists in putting the spacers (57-60) into place in the body (1) and in forcing the seat-carrier piece (40) into the pneumatic chamber by means of a tool (113) which also pushes against the spacers (57-60), the tool acting through the opening (17) before the stopper is put into place, so as to cause the plunger core (9) of the electromagnet to be brought into abutment against its yoke (7) under drive transmitted via the spacers.

18. A method of assembling the seat-carrier piece in the body of the valve according to claim 12, the method being **characterized in that** it consists in inserting a piece of shim (110) via the lateral orifice (61) for housing the manual control member prior to the manual control member being installed, the shim being placed in front of the electromagnet and being of a thickness that is equal to the stroke desired for the valve members (15, 50), in forcing the seat-carrier piece (40) into the pneumatic chamber (13) by means of a tool (113) inserted via the end opening (17) thereof prior to the stopper being put into place until the plunger core (9) of the electromagnet is brought into abutment against its yoke (7), and in withdrawing the piece of shim (110).

19. A method of manufacturing a valve according to claim 6, **characterized in that** it consists in assembling the cartridge (155), in calibrating the axial distance measured between the free ends of the branches (152, 153) of the fork (154) and the seat (248) situated facing the first valve member (215) and in proceeding with controlled forced engagement of the cartridge (155) into the body (201) of the valve until accurate spacing is obtained between the first valve member (215) and its seat (248) when the plunger core (209) is bearing against the yoke (207).

20. A method according to claim 19, **characterized in that** said calibration is performed by partially melting the seat (248) and the ends of the branches (152, 153) of the fork (154) by means of a shaping tool (160) pressed hot against the corresponding end of the cartridge.

21. A method according to claim 19, **characterized in that** in order to obtain the said precise spacing, a reference level of power is fed to the electromagnet while the cartridge (155) is being forced into the body (201) of the valve, the reference level of power tending to attract the plunger core (209) against the yoke (207), and the application of force is stopped when the first valve member (215) is observed to separate from its seat (248).

## Patentansprüche

1. Miniatur-Elektroventil, umfassend:
- ein Elektroventilgehäuse (1, 201),
- einen Elektromagneten mit einem fest mit dem Gehäuse verbundenen Magnetjoch (7, 207) und mit einem Tauchkern (9, 209), der relativ zum Magnetjoch entlang einer Längsachse (2, 202) des Elektromagneten beweglich ist,
- eine pneumatische Kammer (13, 213), die in dem Gehäuse auf der Seite eines Endes des Tauchkerns ausgebildet ist, die dem Magnetjoch entgegengesetzt ist, wobei in die Kammer eine erste Leitung (31, 32; 231, 232) frei mündet und eine zweite und eine dritte Leitung (29, 30; 229, 230) jeweils durch einen Ventilsitz (48, 49; 248, 249), wobei die Mündungen der zweiten und der dritten Leitung koaxial zur Längsachse (2, 202) des Elektromagneten und einander entgegengesetzt sind,
- eine erste (15, 215) und eine zweite Ventilklappe (50, 250), die mit Spiel die beiden Ventilsitze umrahmen, wobei die erste Ventilklappe von dem Tauchkern getragen wird und die zweite Ventilklappe von einer beweglichen Montur getragen wird, die durch ein elastisches Rückstellelement (52, 252) in Kontakt mit dem Tauchkern gehalten wird und dazu bestimmt ist, zusammen mit diesem letztgenannten zwischen einer ersten Position, die dem erregten Zustand des Elektromagneten entspricht und in der der Tauchkern an dem Magnetjoch anliegt, und einer zweiten Position bewegt zu werden, die einer fehlenden Erregung des Elektromagneten entspricht und in der die erste Ventilklappe (15, 215) an ihrem Ventilsitz (48, 248) anliegt, **dadurch gekennzeichnet, dass** die beiden Ventilsitze (48, 49; 248, 249) am Ende eines einzigen Ventilsitzträgerteils (40, 240) ausgebildet sind, das innen die Enden (46,47; 246, 247) der zweiten und der dritten Leitung enthält, wobei dieses Teil in das Gehäuse (1, 201) des Elektroventils in Richtung der dem Elektromagneten und den Ventilsitzen gemeinsamen Achse (2, 202) eingesetzt und in einer genauen Position entlang dieser Achse blockiert ist, die für jedes Elektroventil charakteristisch ist.

2. Elektroventil nach Anspruch 1, **dadurch gekennzeichnet, dass** die bewegliche Montur einen Satz von Streben (57, 58, 59, 60) umfasst, die sich außerhalb des genannten Ventilsitzträgerteils (40) zwischen den Ventilklappen erstrecken und deren Länge gleich dem Abstand ist, der die beiden Ventilsitze (48, 49) trennt, verlängert um den gewünschten Hub jeder Ventilklappe (15, 50).

3. Elektroventil nach Anspruch 2, **dadurch gekennzeichnet, dass** auf der zum Ventilsitz (49) zeigenden Fläche der zweiten Ventilklappe (50) eine Ringscheibe (51) zur Anlage der Streben (57-60) angeordnet ist, wobei der Abstand, der die Anlagefläche der Streben von der Oberfläche des aktiven Teils der Ventilklappe (50) trennt, die Länge der Streben (57-60) verkürzt.

4. Elektroventil nach Anspruch 2, **dadurch gekennzeichnet, dass** das die Ventilsitze tragende Teil (40) und die Streben (57, 58, 59, 60) aus Metall sind und durch maschinelle Bearbeitung hergestellt werden.

5. Elektroventil nach Anspruch 1, **dadurch gekennzeichnet, dass** die bewegliche Montur aus einem Bügel (154) aus thermoplastischem Material gebildet ist, der eine Schale (151) zum Halten der zweiten Ventilklappe (250) umfasst, die einstückig durch mindestens zwei Längsarme (152, 153) verlängert ist, die parallel zur oben genannten gemeinsamen Achse sind, das Ventilsitzträgerteil (240) durchsetzen und deren freie Enden sich auf beiden Seiten des Ventilsitzes (248) befinden, der sich gegenüber der ersten Ventilklappe (215) befindet.

6. Elektroventil nach Anspruch 5, **dadurch gekennzeichnet, dass** die bewegliche Montur und das Ventilsitzträgerteil (240), das ebenfalls aus thermoplastischem Material ist, in Form einer vormontierten Kartusche (155) hergestellt sind, die das genannte Teil (240), die bewegliche Montur mit der zweiten Ventilklappe (250), einen Verschluss (218), der an dem Ventilsitzträgerteil auf der Seite der zweiten Ventilklappe befestigt ist, und ein elastisches Rückstellelement (252) umfasst, das zwischen dem Verschluss und der zweiten Ventilklappe angeordnet ist.

7. Elektroventil nach Anspruch 1, **dadurch gekennzeichnet, dass** das Ventilsitzträgerteil (40, 240) ein Drehteil ist und außen mit drei Krallen versehen ist, die axial zueinander beabstandet und für seine Befestigung im Gehäuse (1, 201) aus Kunststoff vorgesehen sind, sowie zwischen diesen Krallen mit zwei äußeren Nuten (25a, 25b, 42, 43), die Teilabschnitte der zweiten und der dritten Leitung zwischen deren in dem Teil (40, 240) ausgebildeten Endabschnitt und deren in dem Gehäuse ausgebildeten Abschnitt (29, 30; 229, 230) bilden, wobei diese Teilabschnitte zueinander und gegenüber der pneumatischen Kammer (13, 213) abgedichtet sind.

8. Elektroventil nach Anspruch 1, **dadurch gekennzeichnet, dass** das Gehäuse (1, 201) aus Kunststoff mit einer ebenen äußeren Auflagefläche (4, 204) versehen ist, die parallel zur oben genannten Längsachse (2, 202) ist, mit einem Befestigungsauge (94, 294) an einem seiner Enden und mit einer Verankerungsnase (80, 280) an seinem anderen Ende.

9. Elektroventil nach Anspruch 8, **dadurch gekennzeichnet, dass** das Gehäuse (201) auf der zu seiner Auflagefläche (204) entgegengesetzten Seite mit einer einrastbaren Abdeckung (170) versehen ist, die einen klappbaren Schenkel (172) zum Verdecken des Befestigungsauges (294) aufweist.

10. Elektroventil nach Anspruch 8, **dadurch gekennzeichnet, dass** das Gehäuse (201) auf die ortsfesten Abschnitte des Elektromagneten aufgeformt ist und an seinem dem Elektromagneten entgegengesetzten Ende eine zentrale offene Aufnahme hat, die die pneumatische Kammer (13, 213) bildet und mit einem Verschlusselement (18, 218) versehen ist, das bleibend am Gehäuse (1, 201) befestigt ist.

11. Elektroventil nach Anspruch 10, **dadurch gekennzeichnet, dass** das Gehäuse (1) in der pneumatischen Kammer (13) einen zentralen Kern (20) ausbildet, der mit einer Aussparung (25) versehen ist, die mit dem Ventilsitzträgerteil (40) ausgerüstet und mit dem Rest des Gehäuses über mindestens eine Wand (24) verbunden ist, die sich im Wesentlichen senkrecht zur äußeren Auflagefläche erstreckt und in der die zweite und die dritte Leitung (29, 30) ausgebildet sind.

12. Elektroventil nach Anspruch 11, **dadurch gekennzeichnet, dass** der Abschnitt des Gehäuses (1), der die seitliche Wand der pneumatischen Kammer (13) bildet, mit einer Öffnung (61) versehen ist, die einerseits in den Bereich mündet, der den Ventilsitz (48) enthält, der dem Elektromagneten am nächsten ist, und andererseits an der Außenfläche (3) des Gehäuses (1), die der Auflagefläche (4) gegenüberliegt.

13. Elektroventil nach Anspruch 11, **dadurch gekennzeichnet, dass** die oben genannte Öffnung (61) mit einem manuellen Stellelement (70) ausgerüstet ist, das einen Betätigungsfinger (72) zur Betätigung des Tauchkerns (9) des Elektromagneten hat, der mit dem Ende dieses letztgenannten zusammenwirkt.

14. Elektroventil nach Anspruch 8, **dadurch gekennzeichnet, dass** die drei oben genannten Leitungen (29, 229; 30, 230; 31, 231-32, 232) außerhalb des Gehäuses durch dessen Auflagefläche (4, 204) hindurch münden.

15. Elektroventil nach Anspruch 14, **dadurch gekennzeichnet, dass** die erste Leitung zwei getrennte Zweige (31, 32; 231, 232) umfasst, die zueinander beabstandet, in Bezug auf eine zur Auflagefläche (4, 204) senkrechte Ebene symmetrisch sind und durch die Längsachse (2, 202) des Gehäuses gehen.

16. Elektroventil nach Anspruch 15, **dadurch gekennzeichnet, dass** das Gehäuse (1, 201) mindestens ein erstes Teilstück (33, 34, 35; 233, 234, 235) einer zusätzlichen Zweigleitung der ersten Leitung aufweist, das senkrecht zur Auflagefläche (4, 204) ist und dessen Boden (36, 37, 38) eine Wand bildet, die durchbrochen werden kann, um eine permanente Verbindung zwischen diesem ersten Teilstück und der pneumatischen Kammer (13, 213) herzustellen.

17. Verfahren zur Montage des Ventilsitzträgerteils in dem Gehäuse des Elektroventils nach Anspruch 2, **dadurch gekennzeichnet, dass** es darin besteht, die Streben (57-60) in dem Gehäuse (1) anzuordnen und das Ventilsitzträgerteil (40) mit Kraft in die pneumatische Kammer mit Hilfe eines Werkzeugs (113) zu drücken, das auch die Streben (57-60) durch die Öffnung (17) drückt, ehe das Verschlusselement platziert wird, bis das Anstoßen des Kerns (9) des Elektromagneten an seinem Magnetjoch (7) über die Streben bewirkt wird.

18. Verfahren zur Montage des Ventilsitzträgerteils in dem Gehäuse des Elektroventils nach Anspruch 12, **dadurch gekennzeichnet, dass** es darin besteht, durch die seitliche Öffnung (61) der Aufnahme für das manuelle Stellelement vor dessen Platzieren eine Beilegscheibe (110) vor dem Elektromagneten einzuführen, wobei die Dicke der Scheibe gleich dem gewünschten Hub der Ventilklappen (15, 50) ist, das Ventilsitzträgerteil (40) mit Kraft in die pneumatische Kammer (13) durch ein Werkzeug (113) einzudrücken, das durch deren Stirnöffnung (17) eingeführt wird, ehe das Verschlusselement platziert wird, bis das Anstoßen des Kerns (9) des Elektromagneten an seinem Magnetjoch (7) bewirkt wird, und die Beilegscheibe (110) herauszuziehen.

19. Verfahren zur Herstellung eines Elektroventils nach Anspruch 6, **dadurch gekennzeichnet, dass** es darin besteht, die Montage der Kartusche (155) durchzuführen, den axialen Abstand, der zwischen den freien Enden der Arme (152, 153) des Bügels (154) und dem Ventilsitz (248) gemessen wird, der sich gegenüber der ersten Ventilklappe (215) befindet, zu kalibrieren, und das gesteuerte, unter Krafteinwirkung durchgeführte Eindrücken der Kartusche (155) in das Gehäuse (201) des Elektroventils auszuführen, bis man einen genauen Abstand zwischen der ersten Ventilklappe (215) und ihrem Ventilsitz (248) erhält, wenn der Tauchkern (209) an dem Magnetjoch (207) anliegt.

20. Verfahren nach Anspruch 19, **dadurch gekennzeichnet, dass** die oben genannte Kalibrierung durch eine Teilverschmelzung des Ventilsitzes (248) und der Enden der Arme (152, 153) des Bügels (154) mittels eines Formwerkzeugs (160) erfolgt, das mit Wärme auf das entsprechende Ende der Kartusche aufgebracht wird.

21. Verfahren nach Anspruch 19, **dadurch gekennzeichnet, dass** der Elektromagnet zum Erreichen des oben genannten genauen Abstandes während des Eindrückens der Kartusche (155) in das Gehäuse (201) des Elektroventils einer Referenzversorgung ausgesetzt wird, die darauf gerichtet ist, den Tauchkern (209) gegen das Magnetjoch (207) zu ziehen und das Eindrücken zu stoppen, wenn das Lösen der ersten Ventilklappe (215) vom ihrem Ventilsitz (248) festgestellt wird.
